# EUROPÄISCHE PATENTSCHRIFT

(11) **EP 1 190 373 B1**
(45) Veröffentlichungstag und Bekanntmachung des Hinweises auf die Patenterteilung: **04.12.2002**
(21) Anmeldenummer: 00934872.3
(22) Anmeldetag: 04.04.2000
(51) Int. Cl.: G06K 9/66, B07C 3/14

(54) **VERFAHREN ZUM ADRESSLESEN**
ADDRESS READING METHOD
PROCEDE DE LECTURE D'ADRESSES

(30) Priorität: 12.05.1999 DE 19921953
(43) Veröffentlichungstag der Anmeldung: 27.03.2002
(73) Patentinhaber: SIEMENS AKTIENGESELLSCHAFT, 80333 München (DE)
(72) Erfinder: SCHÜSSLER, Michael, D-78467 Konstanz (DE)
(86) Internationale Anmeldenummer: DE0001038
(87) Internationale Veröffentlichungsnummer: WO00070549

(56) Entgegenhaltungen:
- DE-A- 19 612 465

## Beschreibung

Adreßlesesysteme haben die Aufgabe, aus den auf postalischen Sendungen, wie Briefen oder Paketen, befindlichen Textbestandteilen, speziell aus dem Bereich der Empfängeradresse, die Schriftzeichen und Zahlen zu erkennen und aus deren Menge die Verteilinformation abzuleiten. Dazu werden eine Reihe von Erkennungsverfahren eingesetzt, die nach der Abtastung der Sendung das daraus resultierende elektronische Bild Schritt für Schritt analysieren und seine Bestandteile klassifizieren, um schließlich die zur Verteilung relevante Information in elektronischer Textform zu erzeugen. Die Teilschritte sind im einzelnen Layoutanalyse (Sendungstyperkennung, Bestimmung der interessierenden Gebiete/Region of Interest (ROI), Segmentierung des Textbildes in Zeilen, Wörter und/oder Zeichen), Schriftzeichenklassifikation oder Erkennung gebundener Handschrift, und abschließende Interpretation der Textbestandteile.

Die Wirkungsweise jedes Erkennungsverfahrens wird durch Parameter gesteuert. Viele dieser Parameter können über vorgegebene mathematische Optimierungskriterien während einer Lernphase des Systems geschätzt/gelernt/trainiert werden; sie werden im folgenden als trainierbare Parameter bezeichnet. Für alle übrigen Parameter, im folgenden freie Parameter genannt, fehlen solche Optimierungskriterien. Sowohl für die Schätzung trainierbarer Parameter als auch für das Einstellen freier Parameter werden sog. Stichproben von Beispielsendungen benötigt. Jedes Stichprobenelement setzt sich zusammen aus einem Ausschnitt des Sendungsbildes und der geforderten korrekten Lösung (Label, Sollergebnis). Es gibt Stichproben für das gesamte Adreßlesesystem, die sich jeweils aus komplettem Sendungsbild und der Verteilinformation zusammensetzen. Es gibt auch Stichproben für die einzelnen Erkennungs--verfahren (verfahrensspezifische Stichproben), die sich jeweils aus dem Eingabebild des Erkennungsverfahrens und seiner geforderten Ausgabe zusammensetzen. Man unterscheidet Lernund Teststichproben: Lernstichproben werden für die Schätzung trainierbarer Parameter benötigt. Teststichproben dienen der Auswertung der Leistung des trainierten Erkennungsverfahrens. Eine Möglichkeit des geeigneten Einstellens freier Parameter ist die wiederholte Auswertung der Leistung des Erkennungsverfahrens mit verschiedenen Parameterwerten. Dieser Vorgang wird auch als Optimierung der freien Parameter bezeichnet, auch wenn nicht das Auffinden des globalen Optimums im mathematischen Sinne im Vordergrund steht, sondern das Erreichen einer guten Erkennungsleistung innerhalb begrenzter Zeit.

Stand der Technik ist, daß freie Parameter von Adreßlesesystemen durch manuelles, wiederholtes Ausprobieren eingestellt werden. Die verschiedenen Parametereinstellungen werden vom Entwickler teilweise mit heuristischen Maßen, teilweise durch Auswertungen des jeweiligen Erkennungsverfahrens auf verfahrensspezifischen Teststichproben und teilweise durch Auswertungen des gesamten Lesesystems auf Teststichproben beurteilt. Darüberhinaus gibt es einzelne veröffentlichte Arbeiten im Bereich Mustererkennungssysteme, die eine Automatisierung dieses Prozesses anstreben. Sie setzen mathematische Optimierungsverfahren zur Einstellung ausgewählter freier Parameter ein, deren Theorie z.B. in [Press et al.: Numerical Recipes in C, Cambridge University Press, 1992],
[D.E. Goldberg, Genetic Algorithms in Search, Optimization & Machine Learning, Addison-Wesley, 1989 ], [I. Rechenberg, Evolutionsstrategien '94, Frommann-Holzboog, 1994] beschrieben wird. Speziell evolutionäre / genetische Algorithmen werden dabei häufig angewandt. In dem Übersichtsartikel [Applying Genetic Algorithms on Pattern Recognition: An Analysis and Survey, Y.-K. Wang und K.-C. Fan, in Proceedings of the International Conference on Pattern Recognition, 1996], werden drei Typen von Problemen unterschieden: erstens die Optimierung der Auswahl von Merkmalen, zweitens die Optimierung der Klassifikationsfunktion und drittens die Optimierung des Klassifikatorlernens. Weitere Arbeiten zu genetischer Optimierung von Mustererkennungssystemen sind zu finden in der Sonderausgabe [Pattern Recognition Letters: Special Issue on Genetic Algorithms, Vol. 16, No. 8, August 1995]. Die Vorgehensweise dieser Veröffentlichungen läßt sich wie folgt zusammenfassen:
1. wähle eine oder mehrere verschiedene Einstellungen der freien Parameter unter Berücksichtigung bereits ausgewerteter Parametereinstellungen,
2. werte die Parametereinstellung(en) anhand einer Teststichprobe aus,
3. falls angestrebte Leistung erreicht, dann ENDE, sonst gehe zu 1.

Auf ein Erkennungsverfahren innerhalb eines Adreßlesesystems übertragen würde das bedeuten, daß für jede Auswertung einer Parametereinstellung das Verfahren komplett trainiert werden müßte, um dann seine Leistung auf einer Teststichprobe messen zu können.
Die einzelnen Erkennungsverfahren in einem Adreßlesesystem zeichnen sich dadurch aus, daß zu ihrem Training große Lernstichproben nötig sind. Die aufwendigen Berechnungen beim Training dauern nicht selten etliche Stunden auf modernen Arbeitsplatzrechnern. Damit ist die oben beschriebene Technik des Einsatzes von mathematischen Optimierungsverfahren nur sehr bedingt zur Optimierung freier Parameter von Adreßleseverfahren geeignet, denn es wären im Mittel viele Monate an Rechenzeit nötig, um gute Ergebnisse zu erreichen.

Der im Anspruch 1 angegebenen Erfindung liegt daher die Aufgabe zugrunde, ein Verfahren zum Adreßlesen zu schaffen, bei welchem freie Parameter von Adreßlesesystemen mithilfe an sich bekannter Strategien automatisch und kostenarm optimiert werden. Vorteilhafte Ausgestaltungen der Erfindung sind in den Unteransprüchen dargelegt.

Das hier beschriebene Verfahren automatisiert und systematisiert den Prozeß des Einstellens freier Parameter von Adreßleseverfahren und ermöglicht damit bessere Ergebnisse als mit herkömmlichen Optimierungsverfahren. Es macht intensiven Gebrauch von der Tatsache, daß sich Erkennungsverfahren in Adreßlesesystemen in mehrere Teilschritte zerlegen lassen. Im allgemeinen sind auch die freien Parameter einzelnen Teilschritten zuzuordnen, so daß eine Strukturierung wie folgt durchgeführt wird:
Nach jedem Teilschritt des Erkennungsverfahrens werden die verarbeiteten Daten zwischengespeichert (z.B. die verarbeiteten Bilder der Stichprobe und/oder Sätze von trainierten Parametern). Die Daten bleiben so lange erhalten, bis sie bei einem erneuten Aufruf des Teilschritts überschrieben werden. Wenn nun nach einer bereits erfolgten Auswertung freie Parameter verändert werden sollen, so kann die Ausführung der Teilschritte an der Stelle begonnen werden, wo zum ersten Mal diese Parameter auftreten; es muß keine komplette Lern- und Testphase des Erkennungsverfahrens von Beginn an durchlaufen werden. Auf diese Weise lassen sich erhebliche Rechenzeitaufwände einsparen.

Den freien Parametern werden deshalb Kosten zugeordnet: ein freier Parameter hat geringe Kosten, wenn bei einer Änderung seines Wertes nur geringer Rechenzeitaufwand anfällt, um das Erkennungsverfahren für den neuen Wert auszuwerten; das heißt auch, daß der/die Teilschritt(e), der/die von dem Parameter beeinflußt wird/werden, relativ weit hinten in der Abarbeitungsfolge der Teilschritte steht/stehen. Umgekehrt hat ein freier Parameter hohe Kosten, wenn die Auswertung seines neuen Wertes viel Rechenzeitaufwand erfordert und die Abarbeitungsfolge der Teilschritte von relativ weit vorne durchlaufen werden muß.

Das Optimierungsverfahren läuft folgendermaßen ab: Zu Beginn wird wenigstens eine vollständige Auswertung des Erkennungsverfahrens mit beliebig gewählten freien Parametern durchgeführt. Dies dient einer Initialisierung der zwischengespeicherten Daten. Aus der Menge der freien Parameter werden teuere Parameter gewählt und in ihren Werten festgehalten. Alle übrigen freien Parameter werden nun nach einem gängigen mathematischen Optimierungsverfahren verbessert, indem - erstens - immer wieder ihre Werte unter Berücksichtigung bereits ausgewerteter Parametereinstellungen verändert werden und - zweitens - mit diesen veränderten Werten das Erkennungsverfahren trainiert und ausgewertet wird. Das Training und die Auswertung muß dabei nicht von vorne beginnen, sondern es wird auf die zwischengespeicherten Daten zurückgegriffen. Nachdem einige Male Parametereinstellungen ausgewertet worden sind, wird eine neue Menge teurer Parameter gewählt und in ihren Werten festgehalten; beispielsweise werden nun einige der vorher festgehaltenen Parameter freigegeben und in die Optimierung mit einbezogen. Wieder wird eine Zeitlang ein Optimierungsverfahren zur Verbesserung der Parameterwerte eingesetzt, dann wird neu gewählt und so weiter. Durch diese Vorgehensweise können in einer bestimmten Zeit erheblich mehr Parametereinstellungen ausgewertet werden, als es nach der bisherigen Vorgehensweise möglich war.

Die Kosten können durch die erwartete Rechenzeit ab dem frühesten Verarbeitungsschritt, dessen freie Parameter geändert werden, bestimmt werden.

Vorteilhaft ist es auch, die Adressen mittels Klassifikationsverfahren zu lesen, deren Leistung die Erkennungsrate ist.

In einer vorteilhaften Ausgestaltung werden zur Gewährleistung einer systematischen, übersichtlichen Auswertung die Kostenschwellen von den niedrigsten Parameterkosten zu den höchsten Parameterkosten und/oder umgekehrt verändert. Um den Auswerteaufwand gering zu halten, ist es auch günstig, jeden freien Parameter nur einem Verarbeitungsschritt zuzuordnen, wobei die Parameter eines Verarbeitungsschrittes gleiche Kosten aufweisen, und/oder gleichzeitig nur freie Parameter mit gleichen Kosten zu variieren.

Vorteilhaft ist es, die freien Parameter nach einer Evolutionsstrategie zu verändern. Dabei können aus mindestens zwei unterschiedlichen Parameterwertebelegungen als Eltern mehrere Nachkommen erzeugt werden, von denen mindestens zwei Nachkommen mit den besten Leistungen als neue Eltern ausgewählt werden, usw.. Alle Schritte der Lern- und Testphasen müssen nur für soviele Nachkommen durchlaufen werden, wie zuvor als neue Eltern ausgewählt wurden.

Die zu bewertenden Leistungen können sowohl die Leistungen des betreffenden Erkennungsverfahrens, wie z.B. ROI-Findung, Handschrifterkennung, als auch die Leistung des gesamten Lesesystems sein.

Die Erfindung wird nun in einem Ausführungsbeispiel anhand der Zeichnungen näher erläutert.
Dabei zeigen
- FIG 1: ein Ablaufschema für das Lesen von handgeschriebenen Adressen
- FIG 2: eine schematische Darstellung der evolutionären Optimierung der freien Parameter der Klassifikation eines Handschriftenlesers
- FIG 3: eine schematische Darstellung der evolutionären Optimierung der freien Parameter für das HMM-Training eines Handschriftenlesers

Eine Komponente in einem Adreßlesesystem ist ein Erkennungsverfahren für handgeschriebene Wörter. Seine Eingabe ist ein Wortbild und eine Liste zulässiger Wörter, beispielsweise Städtenamen oder Straßennamen. Als Ausgabe wird die bestpassende Zuordnung des Wortbildes zu einem der zulässigen Wörter, d.h. eine Klassifikation des Wortes, erwartet.

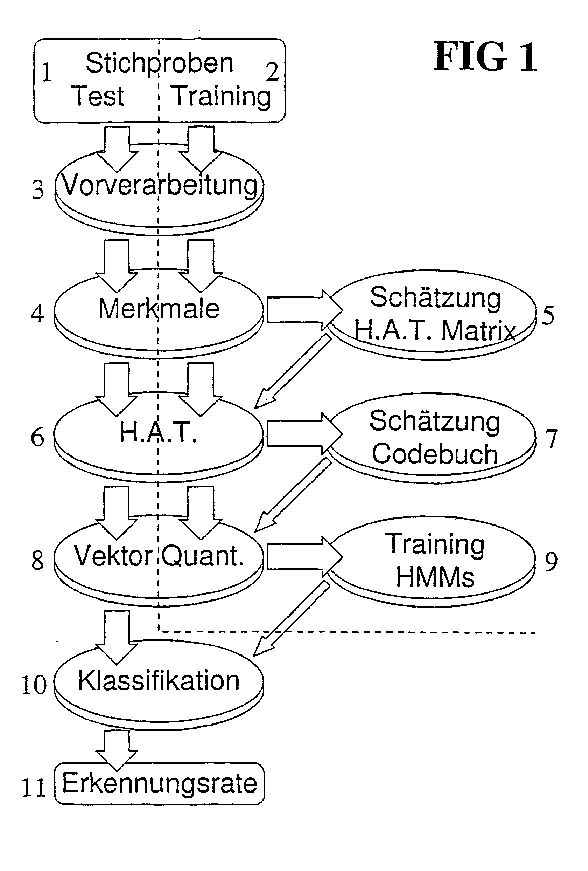

Das in diesem Beispiel betrachtete Handschriftlesesystem basiert auf einer stochastischen Modellierung mit sog. Hidden Markov Modellen (HMMs). FIG 1 zeigt den Ablauf und die wesentlichen Module des Handschriftlesesystems und seine Einbindung in eine Entwicklungsumgebung. Ein Bild aus einer Stichprobe durchläuft mindestens die folgenden Schritte:
Zuerst wird das Bild des handgeschriebenen Wortes vorverarbeitet. Zur Vorverarbeitung 3 gehört eine Normierung der Schrift in Bezug auf Lage, Größe und Neigung sowie eine Beseitigung von Störungen, beispielsweise Unterstreichungen. Anschließend wird aus dem vorverarbeiteten Bild eine Folge von Merkmalvektoren 4 berechnet, indem ein Merkmalfenster schrittweise von links nach rechts über das Bild geführt wird. Die Dimension der Merkmalvektoren wird durch eine Hauptachsentransformation H.A.T. 6 reduziert. Schließlich werden die Vektoren vektorquantisiert 8, d.h. durch eine gewichtete Summe der Normalverteilungen des Codebuchs repräsentiert.

Bei der Entwicklung des Systems gibt es zwei Phasen, die immer wieder zu durchlaufen sind: Lern- und Testphase. In FIG 1 ist rechts der gestrichelten Linie die Lernphase, links die Testphase dargestellt. In der Lernphase wird das System für die Erkennungsaufgabe trainiert. Dazu steht eine umfangreiche Lern-Stichprobe 2 von Bildern handgeschriebener Wörter und deren Transliteration (Repräsentation des Wortes in elektronischer Textform) zur Verfügung. Große Parametermengen werden aus Statistiken der Lern-Stichprobe geschätzt, z.B. die Hauptachsentransformationsmatrix 5, das Codebuch 7 und die HMM-Modellparameter 9 (vgl. FIG 1). In der Testphase wird das trainierte System auf seine Leistungsfähigkeit getestet, d.h. es wird ausgewertet, wie gut es handgeschriebene Wörter lesen kann. Die Auswertung geschieht anhand einer Test-Stichprobe 1 von Bildern handgeschriebener Wörter und deren Transliteration. Jedes Bild der Test-Stichprobe wird dem System zur Klassifikation 10 vorgelegt. Das Ergebnis jeder Klassifikation 10 wird mit der Transliteration des Bildes verglichen; damit wird für jedes Bild entschieden, ob es richtig oder falsch klassifiziert (erkannt) wurde. Über die gesamte Test-Stichprobe wird der Anteil richtig klassifizierter Wortbilder ermittelt (Erkennungsrate 11, vgl. FIG 1); damit hat man ein Maß für die Erkennungsleistung des Systems.

Das Handschrifterkennungssystem besteht aus einer Anzahl von Verarbeitungsschritten. Einige laufen nur in der Lernphase des Systems ab (Schätzungen aus Statistiken), andere nur in der Testphase (Klassifikation und Berechnung der Erkennungsrate); alle übrigen sind Umwandlungen der Darstellungsform der Wortbilder, die sowohl von den Lern- als auch den Testbildern durchlaufen werden (Vorverarbeitung, Merkmalextraktion, Merkmalreduktion, Vektorquantisierung).

Alle Verarbeitungsschritte enthalten eine Anzahl von Parametern, mit denen sich ihre Wirkungsweise steuern läßt. Auch Verarbeitungsschritte der Lernphase, die selbst große Mengen an Parametern statistisch schätzen, werden wiederum in ihrer Wirkungsweise von Parametern beeinflußt. Beispielsweise werden bei der Codebuchschätzung 7 die Mittelwerte und Kovarianzmatrizen einer Anzahl von Normalverteilungsdichten statistisch geschätzt; wie groß diese Anzahl sein soll, muß jedoch vorgegeben werden.

Es werden nun diese Parameter in trainierbare Parameter und freie Parameter unterschieden. Die Werte der trainierbaren Parameter werden aus statistischen Schätzungen gewonnen; sie werden hier nicht weiter betrachtet. Für die freien Parameter hingegen ist unklar, wie ihre Werte zu wählen sind. Einige Beispiele freier Parameter sind:
Vorverarbeitung 3
   normierte Höhe von Kleinbuchstabenbereich, Oberlängen- und Unterlängenbereich; spezielle Verfahrensparameter
Merkmalberechnung 4
   Breite und Schrittweite des Merkmalfensters; Anzahl der Merkmale; Art der Merkmale
Codebuchschätzung 7
   Anzahl der Normalverteilungsdichten; Art des Schätzverfahrens; spezielle Verfahrensparameter
HMM-Training 9
   Anzahl der Modellzustände für jeden Buchstaben; Art der Kontextmodellierung; spezielle Verfahrensparameter

Die richtige Einstellung der freien Parameter ist von entscheidender Bedeutung für die Leistung des Handschrifterkennungssystems. Das Ziel ist, Werte für die freien Parameter zu finden, bei denen das Handschrifterkennungssystem eine gute Erkennungsleistung erzielt. Es gibt eine große Anzahl von mathematischen Optimierungsverfahren, die problemunabhängig die Optima einer Bewertungsfunktion auffinden. Ihre Vorgehensweise ist, die Bewertungsfunktion wiederholt für verschiedene Eingabewerte auszuwerten und aus den Funktionswerten auf geschickte Weise neue Eingabewerte ableiten. Beispiele für solche Optimierungsverfahren sind Gradientenabstieg, Simplex-Verfahren, Simulated Annealing (Simuliertes Ausfrieren), Evolutionäre Algorithmen.

Theoretisch wäre es möglich, alle freien Parameter des Handschrifterkennungssystems mit einem solchen Optimierungsverfahren simultan zu optimieren. Die Bewertungsfunktion ist die Erkennungsrate auf der Teststichprobe. Um die Bewertungsfunktion für einen konkreten Parametersatz auszuwerten, muß zuerst vollständig die Lernphase des Systems und anschließend die Testphase ausgeführt werden. In dem hier betrachteten Handschrifterkennungssystem dauert eine einzige solche Auswertung bis zu 20 Stunden auf einem modernen leistungsfähigen Arbeitsplatzrechner, weil die einzelnen Verarbeitungsschritte mit umfangreichen Berechnungen verbunden sind. Je nach Anzahl der freien Parameter sind jedoch in der Größenordnung hundert bis etliche tausend Auswertungen nötig, um ein zufriedenstellendes Ergebnis zu erzielen. Damit würde ein einziger Optimierungslauf etliche Monate bis Jahre Rechenzeit benötigen, was in der Praxis völlig unpraktikabel ist.

Das im folgenden beschriebene Verfahren reduziert den Rechenzeitbedarf erheblich. Es nützt die Struktur des Handschrifterkennungssystems in geeigneter Weise aus, um die Rechenzeiten für einzelne Auswertungen zu verringern. Nach jedem Verarbeitungsschritt im Handschrifterkennungssystem, z.B. der Vorverarbeitung oder der Schätzung des Codebuchs, werden die verarbeiteten Daten zwischengespeichert (z.B. die vorverarbeiteten Bilder oder das geschätzte Codebuch). Die Daten bleiben so lange erhalten, bis sie bei einem erneuten Aufruf des Verarbeitungsschritts überschrieben werden. Wenn nun nach einer bereits erfolgten Auswertung nur ein einzelner Parameterwert verändert werden soll, so kann die Ausführung der Verarbeitungsschritte an der Stelle begonnen werden, wo zum ersten Mal dieser Parameter auftritt; es muß keine komplette Lern- und Testphase des Systems durchlaufen werden. Wenn z.B. die Anzahl der Codebuchklassen geändert werden soll, so kann auf die bereits vorhandenen reduzierten Merkmalvektoren zurückgegriffen werden. Auf diese Weise lassen sich erhebliche Rechenzeitaufwände einsparen.

Die Kosten C(Pᵢ) eines Parameters Pᵢ werden nun als eine Schätzung der Rechenzeit definiert, die zur Auswertung des Systems benötigt wird, wenn nur der Wert dieses Parameters verändert wurde. Die Präzision dieser Schätzung ist dabei von untergeordneter Bedeutung; entscheidend ist die Ordnung der Parameter nach ihren Kosten, die sich daraus ableiten läßt.

Beispielsweise sind die Parameter der Vorverarbeitung erheblich teurer als die Parameter des HMM-Trainings. Die Parameter werden gemäß ihrer Kosten gruppiert. Die freien Parameter jedes Verarbeitungsschrittes werden zu einer Gruppe zusammengefaßt. Die Idee des beschriebenen Verfahrens liegt darin, teure Parametergruppen jeweils eine Zeitlang konstant zu halten und nur die billigen zu optimieren.

Die Optimierung der freien Parameter des Handschrifterkennungssystems unter Berücksichtigung ihrer Kosten und unter Verwendung von Zwischenergebnissen wird an einem Beispiel, das Gebrauch von Evolutionsstrategien macht, gezeigt.

Evolutionsstrategien sind eine Unterklasse der evolutionären Algorithmen und orientieren sich in ihrer Vorgehensweise an der natürlichen Evolution. Der Begriff der Evolutionsstrategie wird hier verwendet wie bei [I. Rechenberg, Evolutionsstrategien '94, Frommann-Holzboog, 1994]. In Analogie zur Biologie wird jede Parameterwertebelegung als eindeutige Kennzeichnung und als Erbmasse (Gen) eines Individuums aufgefaßt. Eine Gruppe von Individuen heißt Population. Begonnen wird mit einem oder wenigen Ur-Individuen, die z.B. zufällig erzeugte Parameterwertebelegungen sein können. Die Ur-Individuen erzeugen als Eltern eine Population von Nachfolge-Individuen (Rekombination). Jedes neue Individuum wird erzeugt durch eine Vermischung der Gene (Parameterwertebelegungen) zweier Eltern (Crossover) sowie durch leichte zufällige Veränderungen im entstandenen Gen (Mutation). Nun wird die Fitneß der neuen Individuen ermittelt, d.h. ihre Güte wird beurteilt anhand einer Auswertung des zu optimierenden Systems mit ihrer Parameterwertebelegung. Die Individuen mit der höchsten Fitneß werden ausgewählt (Selektion), um Eltern einer neuen Generation zu werden, die übrigen sterben (survival of the fittest). Dieser Prozeß des Erzeugens, Bewertens und Auswählens von Individuen kann beliebig lange wiederholt werden.

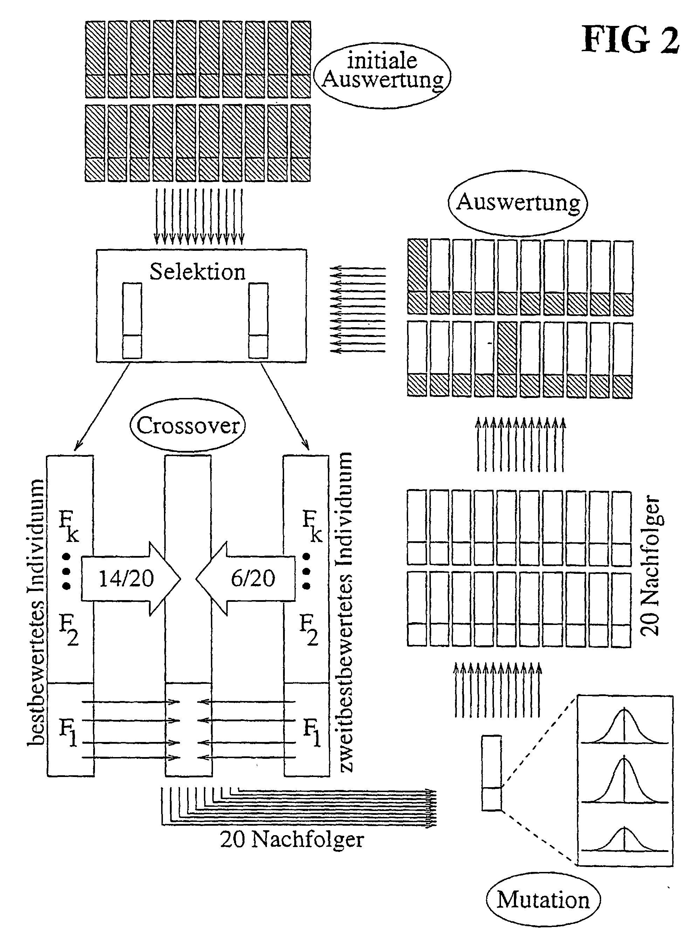

Die Menge der freien Parameter wird mit F = {Pᵢ | i=1...N} bezeichnet. Sie werden gemäß ihren Kosten in K Gruppen Fₖ = {Pᵢ | C(Pᵢ) = cₖ), k=1...K zusammengefaßt; K ist die Anzahl der Verarbeitungsschritte des Handschrifterkennungssystems. Die Vorgehensweise anhand eines konkreten Beispiels ist wie folgt (siehe FIG 2): Es werden 20 Individuen (Parameterwertebelegungen) völlig zufällig innerhalb ihrer zulässigen Wertebereiche erzeugt. In der Abbildung ist jedes Individuum durch ein Rechteck gekennzeichnet, das den Vektor seiner Parameterwerte darstellt. Für jedes Individuum wird zuerst die Trainingsphase und anschließend die Testphase des Handschrifterkennungssystems durchlaufen.

In FIG 2 sind die initialen Individuen vollständig liniert hinterlegt, weil zu ihrer Auswertung komplett Trainings- und Testphase durchlaufen werden müssen -initiale Auswertung-. Danach steht für jedes Individuum eine Erkennungsrate fest. Die beiden Individuen mit der höchsten Erkennungsrate werden weiter betrachtet -Selektion-, sie sind die Eltern für die nächste Generation.

Nun wird als erstes der Verarbeitungsschritt der Klassifikation verbessert. Freie Parameter der Klassifikation sind z.B. die Breite des Suchstrahls und ein Rückweisungsschwellwert. Die beiden Eltern erzeugen durch die folgende spezielle Crossover-Operation 20 Nachfolger: 14 Nachfolger erben die Wertebelegung aller nicht zur Klassifikation gehörenden Parameter vom bestbewerteten Elternteil, 6 erben sie vom zweitbestbewerteten Elternteil. Dies ist in FIG 2 durch den breiten Pfeil gekennzeichnet. Nun müssen für alle 20 Nachfolger noch die Werte der Parameter der Klassifikation festgelegt werden. Für jeden Klassifikations-Parameter wird individuell nichtdeterministisch entschieden, ob der Nachfolger den Parameterwert vom ersten oder vom zweiten Elternteil erhält. Dabei wird der bestbewertete Elternteil mit einer Wahrscheinlichkeit von 14/20 gewählt, der zweitbestbewertete Elternteil mit einer Wahrscheinlichkeit von 6/20. Dies ist in FIG 2 durch die einzelnen dünnen Pfeile gekennzeichnet.

Die 20 Nachfolger werden nun einer Mutation unterzogen. Die Werte der Klassifikations-Parameter werden individuell bei jedem der 20 Nachfolger per Zufall leicht innerhalb ihres zulässigen Wertebereichs verändert. Als Zufallsfunktion wird eine Normalverteilung verwendet, deren Mittelwert der aktuelle Wert des Parameters ist.

Als nächstes müssen die 20 Nachfolger ausgewertet werden. Zuerst werden die 14 Nachfolger ausgewertet, die vom bestbewerteten Elternteil die Wertebelegung aller Nicht-Klassifikations-Parameter geerbt haben. Nur bei der Auswertung des ersten Nachfolgers müssen einmal alle Verarbeitungsschritte des Handschrifterkennungssystems (Trainings- und Testphase) durchlaufen werden; die übrigen 13 unterscheiden sich nur in den Klassifikations-Parametern, daher muß auch nur die Klassifikation für jeden Nachfolger durchlaufen werden. Dies ist in FIG 2 durch die gestrichelt hinterlegten Bereiche der Parametervektoren (Individuen) gekennzeichnet. Anschließend werden die übrigen 6 Nachfolger ausgewertet; für sie gilt das gleiche wie für die ersten 14.

Wie schon zu Beginn, werden nun die 2 besten aus den 20 bewerteten Individuen als Eltern einer neuen Generation ausgewählt (Selektion). Sie erzeugen durch Crossover und Mutation wiederum 20 Nachfolger, die bewertet werden usw.
Eine bestimmte Anzahl von Generationen lang werden nur die Klassifikations-Parameter optimiert. Dann werden ihre guten Werte "eingefroren", und es werden die Parameter des vorhergehenden Verarbeitungsschrittes, nämlich des HMM-Trainings, optimiert.

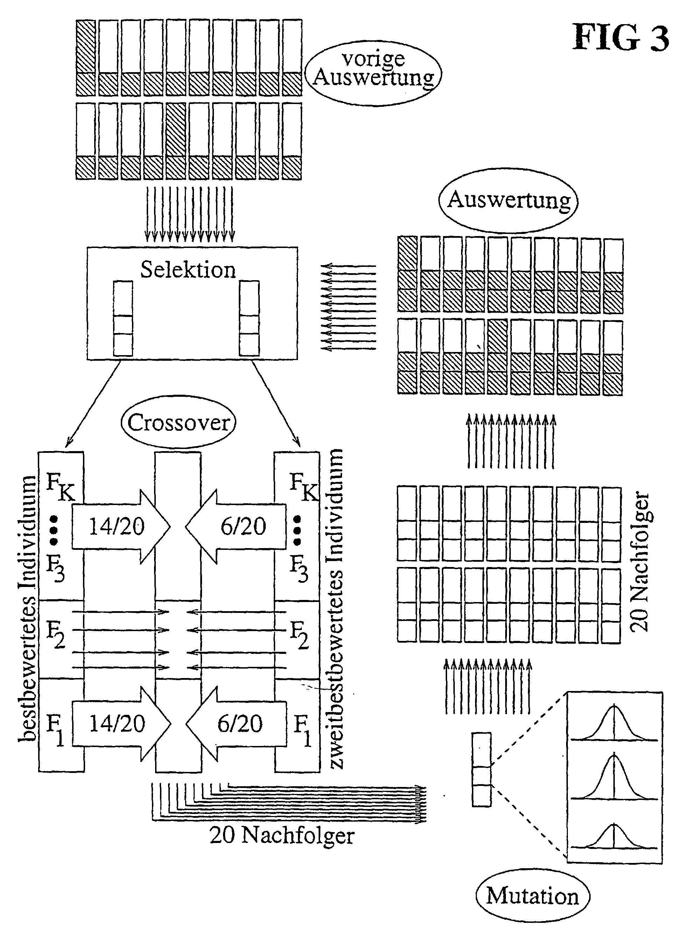

Nun wird der Verarbeitungsschritt des HMM-Training verbessert (siehe FIG 3). Freie Parameter des HMM-Trainings sind z.B. die Anzahl der Modellzustände für jeden Buchstaben, die Art der Kontextmodellierung und spezielle Verfahrensparameter. Die beiden Eltern erzeugen durch Crossover 20 Nachfolger: 14 Nachfolger erben die Wertebelegung aller nicht zum HMM-Training gehörenden Parameter vom bestbewerteten Elternteil, 6 erben sie vom zweitbestbewerteten Elternteil. Dies ist in FIG 3 durch den breiten Pfeil gekennzeichnet. Nun müssen für alle 20 Nachfolger noch die Werte der HMM-Trainings-Parameter festgelegt werden. Für jeden HMM-Trainings-Parameter wird individuell nichtdeterministisch entschieden, ob der Nachfolger den Parameterwert vom ersten oder vom zweiten Elternteil erhält. Dabei wird wieder der bestbewertete Elternteil mit einer Wahrscheinlichkeit von 14/20 gewählt, der zweitbestbewertete Elternteil mit einer Wahrscheinlichkeit von 6/20. Dies ist in FIG 3 durch die einzelnen dünnen Pfeile gekennzeichnet.

Die 20 Nachfolger werden einer Mutation unterzogen. Die Werte der HMM-Trainings-Parameter werden individuell bei jedem der 20 Nachfolger per Zufall leicht innerhalb ihres zulässigen Wertebereichs verändert. Als Zufallsfunktion wird eine Normalverteilung verwendet, deren Mittelwert der aktuelle Wert des Parameters ist.

Als nächstes werden die 20 Nachfolger ausgewertet. Zuerst werden die 14 Nachfolger ausgewertet, die vom bestbewerteten Elternteil die Wertebelegung aller Nicht-HMM-Trainings-Parameter geerbt haben. Nur bei der Auswertung des ersten Nachfolgers müssen einmal alle Verarbeitungsschritte des Handschrifterkennungssystems (Trainings- und Testphase) durchlaufen werden; die übrigen 13 unterscheiden sich nur in den HMM-Trainings-Parametern. Für diese 13 muß jeweils das HMM-Training und die Klassifikation durchlaufen werden. Dies ist in FIG 3 durch die gestrichelt hinterlegten Bereiche der Parametervektoren (Individuen) gekennzeichnet. Anschließend werden die übrigen 6 Nachfolger ausgewertet; für sie gilt das gleiche wie für die ersten 14.

Wiederum werden die 2 besten aus den 20 bewerteten Individuen als Eltern einer neuen Generation ausgewählt (Selektion). Sie erzeugen durch Crossover und Mutation wiederum 20 Nachfolger, die bewertet werden usw.

Eine bestimmte Anzahl von Generationen lang werden nur die HMM-Trainings-Parameter optimiert. Dann werden auch ihre guten Werte "eingefroren", und es werden die Parameter des vorhergehenden Verarbeitungsschrittes, nämlich der Vektorquantisierung, optimiert. Dieses Vorgehen wird fortgesetzt mit der Optimierung der Codebuchschätzung, Hauptachsentransformation und so weiter bis zur Vorverarbeitung. Dann wird wieder bei der Klassifikation begonnen, und die Klassifikations-Parameter werden wiederum eine Zeitlang optimiert, und so weiter.

Die Anzahl von Generationen für die Optimierung jeder Parametergruppe wird in Abhängigkeit von der Anzahl von Parametern in dieser Gruppe sowie dem Fortgang der Optimierung insgesamt gewählt. Zu Beginn der Optimierung wird z.B. eine Gruppe mit 3 Parametern über 3 Generationen optimiert.
Nachdem alle Gruppen einmal optimiert wurden und wieder Fₖ erreicht ist, wird sie über 4 Generationen optimiert, beim nächsten Mal 5 Generationen usw. Eine Gruppe mit 4 Parametern wird über 4 Generationen optimiert, dann über 5 usw.

Darüberhinaus ist es auch sinnvoll, die Größe der Population anzupassen an die Anzahl der Parameter in der Gruppe. Bei einer Gruppe mit 3 Parametern sollten statt 20 Nachfolgern nur etwa 15 erzeugt werden, bei einer großen Gruppe mit 6 Parametern dagegen etwa 30.

Bislang wurde im Ausführungsbeispiel einzig die Erkennungsrate des Handschrifterkennungssystems auf einer Teststichprobe als Bewertungsmaß für Parametereinstellungen verwendet. Da das Handschrifterkennungssystem nur ein Erkennungsverfahren von mehreren innerhalb des Adreßlesesystems ist, macht es darüberhinaus Sinn, auch die Leseleistung des gesamten Adreßlesesystems als Bewertungsmaß zu verwenden. Im allgemeinen ist es erheblich aufwendiger, die Leseleistung des gesamten Adreßlesesystems zu ermitteln als die von einzelnen Erkennungsverfahren; andererseits ist das Ziel der Parameteroptimierung die Verbesserung des gesamten Adreßlesesystems. Daher ist es sinnvoll, von Zeit zu Zeit die Leseleistung des gesamten Adreßlesesystems zu ermitteln und daraus Entscheidungen über das weitere Vorgehen bei der Optimierung abzuleiten, beispielsweise ob die angestrebte Leseleistung schon erreicht wurde und abgebrochen werden kann, oder über die Wahl einer neuen Parametergruppe.

## Patentansprüche

1. Verfahren zum Adreßlesen mit mindestens zwei durch Parameter gesteuerten Verarbeitungsschritten, das mittels Lernund Testphasen optimiert wird, wobei mit an sich bekannten Lernverfahren anhand einer Lernstichprobe Parameter automatisch adaptiert werden und die Leistung des Adreßlesens anhand einer Teststichprobe mit den Parametern aus der Lernphase ermittelt wird, wobei jeder Verarbeitungsschritt als Eingabe die Werte seiner Parameter und verarbeitete und gespeicherte Daten von vorangegangenen Verarbeitungsschritten erhält, mindestens ein Verarbeitungsschritt als notwendige Eingabe die Stichprobenelemente erhält und ein Verarbeitungsschritt das Leseergebnis als Leistung produziert, **gekennzeichnet durch** folgende Schritte:
- Sämtlichen freien Parametern, die in der Lernphase mit der Lernstichprobe nicht automatisch adaptierbar sind, werden Kosten zugeordnet;
- Festlegen einer Kostenschwelle;
- Ändern von mehreren unterhalb der Kostenschwelle liegenden freien Parametern nach einer an sich bekannten Optimierungsstrategie unter Berücksichtigung aller bereits ermittelten Leistungen von Parameterwertebelegungen;
- Abarbeiten der Lernphase anhand der Lernstichprobe, beginnend bei dem frühesten Verarbeitungsschritt, dessen freie Parameter geändert wurden;
- Abarbeiten der Testphase anhand der Teststichprobe beginnend bei dem frühesten Verarbeitungsschritt, dessen Parameter geändert wurden und Ermitteln der Leistung des Adreßlesens für die aktuellen Parameterwerte;
- Weiteres Ändern freier Parameter nach einer Optimierungsstrategie, die unterhalb der festgelegten Kostenschwelle liegen und anschließendes Abarbeiten der Lern- und Testphasen, bis eine festgelegte Leistung erreicht wird oder bis eine festgelegte Anzahl von Lern- und Testphasen abgearbeitet wird;
- Festlegen einer neuen Kostenschwelle und Ändern von einem oder mehreren unterhalb der Kostenschwelle liegenden freien Parametern nach einer Optimierungsstrategie und Abarbeiten der Lern- und Testphasen mit Ermittlung der Leistung solange, bis eine festgelegte Leistung oder bis eine festgelegte Anzahl von Lern- und Testphasen abgearbeitet wurde;
- Ändern der Kostenschwellen und Durchführen der vorhergehend beschriebenen Schritte solange, bis eine festgelegte Leistung des gesamten Adreßlesens erreicht wurde oder festgelegte Gesamtkosten überschritten wurden;
- Lesen von aktuellen Adressen mit den adaptierten Parametern.

2. Verfahren nach Anspruch 1,
**dadurch gekennzeichnet, daß** die Kosten durch die erwartete Rechenzeit ab dem frühesten Verarbeitungsschritt, dessen freie Parameter geändert werden, bestimmt werden.

3. Verfahren nach Anspruch 1,
**dadurch gekennzeichnet, daß** die Adressen mittels Klassifikationsverfahren gelesen werden, deren Leistung die Erkennungsrate ist.

4. Verfahren nach Anspruch 1,
**dadurch gekennzeichnet, daß** die Kostenschwellen von den niedrigsten Parameterkosten zu höchsten Parameterkosten und/oder umgekehrt verändert werden.

5. Verfahren nach Anspruch 1,
**dadurch gekennzeichnet, daß** jeder freie Parameter genau einem Verarbeitungsschritt zugeordnet ist und die Parameter eines Verarbeitungsschrittes die gleichen Kosten besitzen.

6. Verfahren nach Anspruch 5,
**dadurch gekennzeichnet, daß** gleichzeitig nur freie Parameter mit gleichen Kosten variiert werden.

7. Verfahren nach Anspruch 1,
**dadurch gekennzeichnet, daß** die freien Parameter nach einer Evolutionsstrategie verändert werden.

8. Verfahren nach Anspruch 7,
**dadurch gekennzeichnet, daß** für einen Verarbeitungsschritt oder für das gesamte Leseverfahren mindestens zwei unterschiedliche Parameterwertebelegungen erzeugt werden, die als Eltern Nachkommen einer Generation erzeugen, von denen mindestens zwei Nachkommen mit den besten Leistungen ausgewählt werden, die wiederum als Eltern für eine neue Generation dienen, wobei alle Schritte der Lern- und Testphase nur für soviele Nachkommen durchlaufen werden müssen, wie zuvor als neue Eltern ausgewählt wurden, und wobei für die übrigen Nachkommen nur ab der betrachteten Verarbeitungsstufe Trainings- und Testphasen durchlaufen werden.

9. Verfahren nach einem der Ansprüche 1 bis 8,
**dadurch gekennzeichnet, daß** die bewerteten Leistungen bei Änderungen für eine bestimmte Kostenschwelle die Leistungen des betreffenden Erkennungsverfahrens sind.

10. Verfahren nach einem der Ansprüche 1 bis 9,
**dadurch gekennzeichnet, daß** die bewerteten Leistungen bei Änderungen für eine bestimmte Kostenschwelle die Leistungen des gesamten Adreßleseverfahrens sind.

## Claims

1. Address reading method with at least two processing steps controlled by parameters, which is optimized by means of learning and testing phases, parameters being automatically adapted by learning methods known per se on the basis of a learning sample and the performance of the address reading being determined on the basis of a test sample with the parameters from the learning phase, each processing step receiving as an input the values of its parameters and processed and stored data from previous processing steps, at least one processing step receiving the random sample elements as the necessary input and one processing step producing the reading result as a performance, **characterized by** the following steps:
- all the free parameters which cannot be automatically adapted in the learning phase with the learning sample are assigned costs;
- fixing of a cost threshold;
- modification of a number of free parameters lying below the cost threshold on the basis of an optimization strategy known per se, taking all the already determined performances of parameter-value allocations into account;
- execution of the learning phase on the basis of the learning sample, beginning with the earliest processing step of which the free parameters have been modified;
- execution of the testing phase on the basis of the test sample, beginning with the earliest processing step of which the parameters have been modified, and determination of the performance of the address reading for the current parameter values;
- further modification on the basis of an optimization strategy of free parameters which lie below the fixed cost threshold and subsequent execution of the learning and testing phases until a fixed performance is achieved or until a fixed number of learning and testing phases are executed;
- fixing of a new cost threshold and modification of one or more free parameters lying below the cost threshold on the basis of an optimization strategy and execution of the learning and testing phases with determination of the performance until a fixed performance is obtained or until a fixed number of learning and testing phases are executed;
- modification of the cost thresholds and implementation of the steps described above until a fixed performance of the address reading as a whole has been achieved or fixed overall costs have been exceeded;
- reading of current addresses with the adapted parameters.

2. Method according to Claim 1, **characterized in that** the costs are determined through the expected computing time as from the earliest processing step of which the free parameters are modified.

3. Method according to Claim 1, **characterized in that** the addresses are read by means of classification methods, the performance of which is the recognition rate.

4. Method according to Claim 1, **characterized in that** the cost thresholds of the lowest parameter costs in relation to the highest parameter costs and/or vice versa are modified.

5. Method according to Claim 1, **characterized in that** each free parameter is assigned to precisely one processing step and the parameters of a processing step have the same costs.

6. Method according to Claim 5, **characterized in that** only free parameters with the same costs are varied at the same time.

7. Method according to Claim 1, **characterized in that** the free parameters are modified on the basis of an evolution strategy.

8. Method according to Claim 7, **characterized in that**, for a processing step or for the reading method as a whole, at least two different parameter-value allocations are generated and, as parents, generate offspring of one generation, of which at least two offspring with the best performances are selected and in turn serve as parents for a new generation, it only being necessary to run through all the steps of the learning and testing phases for as many offspring as were previously selected as new parents, and it only being necessary for the remaining offspring to run through the procedure as from the processing stage considered of the training and testing phases.

9. Method according to one of Claims 1 to 8,
**characterized in that** the assessed performances when modifications are made for a certain cost threshold are the performances of the recognition method concerned.

10. Method according to one of Claims 1 to 9,
**characterized in that** the assessed performances when modifications are made for a certain cost threshold are the performances of the address reading method as a whole.

## Revendications

1. Procédé qui est destiné à la lecture d'adresses avec au moins deux étapes de traitement commandées par des paramètres et qui est optimisé au moyen de phases d'apprentissage et de test, dans lequel on adapte automatiquement des paramètres à l'aide d'un échantillon d'apprentissage avec des procédés d'apprentissage connus et on détermine les performances de la lecture d'adresses à l'aide d'un échantillon de test avec les paramètres issus de la phase d'apprentissage, dans lequel chaque étape de traitement reçoit en entrée les valeurs de ses paramètres et des données traitées et mémorisées d'étapes de traitement précédentes, au moins une étape de traitement reçoit en entrée nécessaire les éléments échantillons et une étape de traitement produit le résultat de lecture comme performance,
**caractérisé par** les étapes suivantes :
- on associe des coûts à tous les paramètres libres qui ne peuvent pas être adaptés automatiquement pendant la phase d'apprentissage avec l'échantillon d'apprentissage ;
- on fixe un seuil de coût ;
- on modifie plusieurs paramètres libres, situés en dessous du seuil de coût, selon une stratégie d'optimisation connue en tenant compte de toutes les performances déjà déterminées des valeurs de paramètres ;
- on exécute la phase d'apprentissage à l'aide de l'échantillon d'apprentissage, en commençant par la première étape de traitement dont les paramètres libres ont été modifiés ;
- on exécute la phase de test à l'aide de l'échantillon de test en commençant par la première étape de traitement dont les paramètres libres ont été modifiés et on détermine les performances de la lecture d'adresses pour les valeurs de paramètres actuelles ;
- on modifie à nouveau des paramètres libres, situés en dessous du seuil de coût, selon une stratégie d'optimisation et on exécute ensuite les phases d'apprentissage et de test jusqu'à ce que des performances fixées soient atteintes ou jusqu'à ce qu'un nombre fixé de phases d'apprentissage et de test soit exécuté ;
- on fixe un nouveau seuil de coût, on modifie un ou plusieurs paramètres libres, situés en dessous du seuil de coût, selon une stratégie d'optimisation et on exécute les phases d'apprentissage et de test en déterminant des performances jusqu'à ce qu'une performance fixée soit atteinte ou jusqu'à ce qu'un nombre fixé de phases d'apprentissage et de test soit exécuté ;
- on modifie des seuils de coûts et on met en oeuvre les étapes décrites ci-dessus jusqu'à ce que des performances fixées de l'ensemble de la lecture d'adresses soient atteintes ou jusqu'à ce qu'un coût total fixé soit dépassé ;
- on lit des adresses actuelles avec les paramètres adaptés.

2. Procédé selon la revendication 1,
**caractérisé par le fait qu'**on détermine les coûts avec le temps de calcul escompté à partir de la première étape de traitement dont les paramètres libres sont modifiés.

3. Procédé selon la revendication 1,
**caractérisé par le fait qu'**on lit les adresses au moyen de procédés de classification dont les performances sont données par le taux de reconnaissance.

4. Procédé selon la revendication 1,
**caractérisé par le fait qu'**on modifie les seuils de coûts des coûts de paramètres les plus bas aux coûts de paramètres les plus hauts et/ou inversement.

5. Procédé selon la revendication 1,
**caractérisé par le fait que** chaque paramètre libre est associé à exactement une étape de traitement et les paramètres d'une étape de traitement ont des coûts identiques.

6. Procédé selon la revendication 5,
**caractérisé par le fait qu'**on ne modifie simultanément que des paramètres libres ayant des coûts identiques.

7. Procédé selon la revendication 1,
**caractérisé par le fait qu'**on modifie les paramètres libres selon une stratégie d'évolution.

8. Procédé selon la revendication 7,
**caractérisé par le fait que**, pour une étape de traitement ou pour l'ensemble du procédé de lecture, on produit au moins deux valeurs de paramètres différentes qui produisent en tant que parents des descendants d'une génération parmi lesquels au moins deux descendants ayant les meilleures performances sont sélectionnés et servent à leur tour en tant que parents d'une nouvelle génération, toutes les étapes des phases d'apprentissage et de test ne devant être mises en oeuvre que pour autant de descendants qu'il y avait avant de sélectionnés en tant que nouveaux parents et les phases d'apprentissage et de traitement n'étant mises en oeuvre pour les autres descendants qu'à partir de l'étape de traitement considérée.

9. Procédé selon l'une des revendications 1 à 8,
**caractérisé par le fait que** les performances évaluées lors de modifications pour un certain seuil de coût sont les performances du procédé de reconnaissance concerné.

10. Procédé selon l'une des revendications 1 à 9,
**caractérisé par le fait que** les performances évaluées lors de modifications pour un certain seuil de coût sont les performances de l'ensemble du procédé de lecture d'adresses.
